(19) Europäisches Patentamt
European Patent Office
Office européen des brevets

(11) **EP 1 855 933 B1**

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(21) Anmeldenummer: **06707091.2**

(22) Anmeldetag: **20.02.2006**

(51) Int Cl.:
***B62D 5/04*** ^(2006.01)

(86) Internationale Anmeldenummer:
**PCT/EP2006/001509**

(87) Internationale Veröffentlichungsnummer:
**WO 2006/092212 (08.09.2006 Gazette 2006/36)**

(54) **VERFAHREN ZUR STEUERUNG EINES ELEKTRISCHEN LENKHILFESYSTEMS**

METHOD FOR CONTROL OF AN ELECTRICAL STEERING SERVO SYSTEM

PROCEDE DE COMMANDE D'UN SYSTEME DE DIRECTION ASSISTEE ELECTRIQUE

(84) Benannte Vertragsstaaten:
**DE ES FR GB IT**

(30) Priorität: **01.03.2005 DE 102005009350**

(43) Veröffentlichungstag der Anmeldung:
**21.11.2007 Patentblatt 2007/47**

(73) Patentinhaber: **TRW Automotive GmbH**
**73553 Alfdorf (DE)**

(72) Erfinder: **BRÖCKER, Markus**
**41516 Grevenbroich (DE)**

(74) Vertreter: **Strass, Jürgen**
**Prinz & Partner GbR**
**Rundfunkplatz 2**
**80335 München (DE)**

(56) Entgegenhaltungen:
**WO-A-01/12492**

EP 1 855 933 B1

**Beschreibung**

Die Erfindung betrifft ein Verfahren zur Steuerung eines elektrischen Lenkhilfesystems mit einem Elektromotor zur Bereitstellung eines Hilfsdrehmoments für eine Lenkanordnung, bei dem ein vom Fahrer aufgebrachtes Lenkraddrehmoment gemessen wird. Die Erfindung betrifft ferner ein elektrisches Lenkhilfesystem mit einer Steuerung zur Durchführung des Verfahrens.

Aus der EP-A-1211 158 sind ein elektrisches Lenkhilfesystem und ein Verfahren zur Steuerung des Lenkhilfesystems der eingangs genannten Art bekannt. Das vom Elektromotor bereitzustellende Hilfsdrehmoment wird in Abhängigkeit der Lenksäulendrehbeschleunigung und einem Parameter berechnet, der repräsentativ für die Trägheit des Rotors des Elektromotors ist.

Weiterhin beschreibt die WO 01/12492 ein Verfahren nach dem Oberbegriff des Anspruchs 1, bei dem das Lenkraddrehmomentsignal in einen höherfrequenten und einen niederfrequenten Anteil aufgeteilt wird.

Aufgabe der Erfindung ist es, bei einem elektrischen Lenkhilfesystem auf kostengünstige Weise ein verbessertes Lenkgefühl zu vermitteln.

Zur Lösung dieser Aufgabe wird ein Verfahren der eingangs genannten Art vorgeschlagen, bei dem das gemessene Lenkraddrehmomentsignal zur Bestimmung einer Trägheitskompensations-Drehmomentanforderung hochpaßgefiltert wird, so daß ein für die Dynamik des Lenkraddrehmomentsignals repräsentatives Signal erhalten wird. Das erfindungsgemäße Verfahren sorgt für eine optimierte Kompensierung des Trägheitsgefühls bei einem elektrischen Lenkhilfesystem. Durch die erfindungsgemäß vorgesehene Hochpaßfilterung des Lenkraddrehmomentsignals wird bei der Bereitstellung des Hilfsdrehmoments die Dynamik der Lenkbewegung mit berücksichtigt, da die Bestimmung der Trägheitskompensations-Drehmomentanforderung an den Elektromotor in Abhängigkeit des hochpaßgefilterten Lenkraddrehmomentsignals erfolgt. Das erfindungsgemäße Verfahren hat den Vorteil, daß für die Bestimmung der Trägheitskompensations-Drehmomentanforderung Eingangsgrößen verwendet werden, die bei elektrischen Lenkhilfesystemen standardmäßig erfaßt werden. Somit sind keine zusätzlichen Sensoren erforderlich; nur die Programmierung der Steuerung muß modifiziert werden. Der erfindungsgemäße Ansatz zur Bestimmung der Trägheitskompensations-Drehmomentanforderung ist sehr flexibel und kann leicht an verschiedene Anforderungen an das Lenkgefühl angepaßt werden.

Gemäß einer bevorzugten Ausführungsform der Erfindung fließt die bestimmte Trägheitskompensations-Drehmomentanforderung in einen Unterstützungs- und Stabilitätsregelpfad zur Steuerung des elektrischen Lenkhilfesystems ein. Somit führt die zusätzliche erfindungsgemäße Steuerkomponente zu einem stabilen Steuersystem.

Weitere vorteilhafte und zweckmäßige Ausgestaltungen des erfindungsgemäßen Verfahrens ergeben sich aus den Unteransprüchen 2 bis 7.

Die Erfindung schafft auch ein elektrisches Lenkhilfesystem mit einer Steuerung zur Durchführung des erfindungsgemäßen Verfahrens. Das elektrische Lenkhilfesystem umfaßt einen Elektromotor zur Bereitstellung eines Hilfsdrehmoments für eine Lenkanordnung. Die Steuerung weist einen Hochpaßfilter auf, in dem das Lenkraddrehmomentsignal hochpaßgefiltert wird.

Vorteilhafte und zweckmäßige Ausgestaltungen des erfindungsgemäßen elektrischen Lenkhilfesystems ergeben sich aus den Unteransprüchen 9 bis 12.

Die Erfindung wird anhand der nachfolgenden Beschreibung unter Bezugnahme auf die beigefügten Zeichnungen genauer erläutert. In den Zeichnungen zeigen:

- Figur 1 ein Blockdiagramm einer Hilfsdrehmomentsteuerung für ein erfindungsgemäßes elektrisches Lenkhilfesystem; und

- Figur 2 ein Blockdiagramm für die Berechnung der Trägheitskompensations-Drehmomentanforderung.

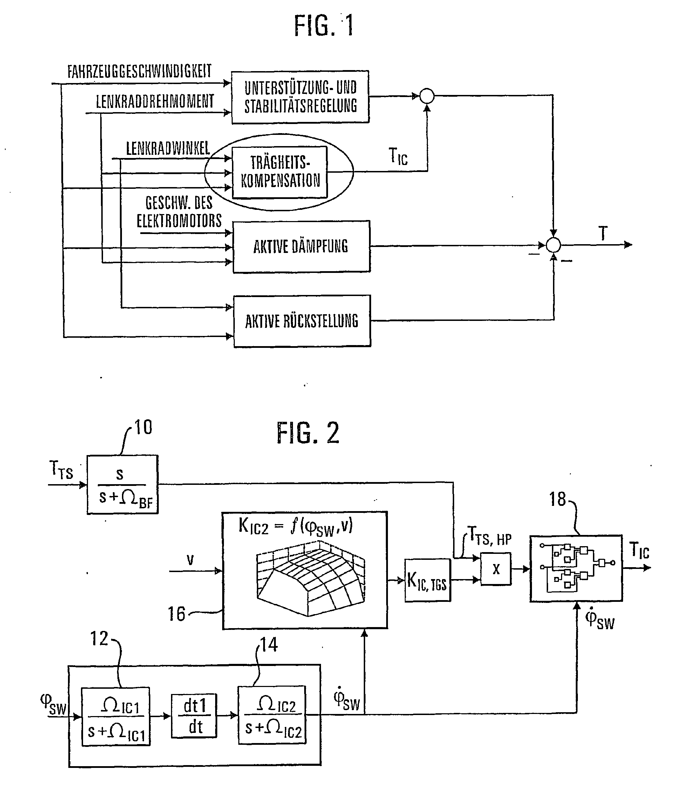

Das Blockdiagramm in Figur 1 zeigt, wie bei einem erfindungsgemäßen elektrischen Lenkhilfesystem mit einem Elektromotor zur Bereitstellung eines Hilfsdrehmoments für eine Lenkanordnung (Lenkwellen- oder Lenkgliedanordnung) die Drehmomentanforderung T an den Elektromotor zur Erzielung eines verbesserten Lenkgefühls bestimmt wird. Aus den Eingangsgrößen Fahrzeuggeschwindigkeit, Lenkraddrehmoment, Lenkradwinkel und Geschwindigkeit des Elektromotors werden in verschiedenen Verarbeitungsblöcken die Beiträge ermittelt, aus denen sich die Drehmomentanforderung T zusammensetzt. Im folgenden wird die Bestimmung des Trägheitskompensationsbetrags $T_{IC}$ beschrieben, der in den Unterstützungs- und Stabilitätsregelpfad der Lenkhilfesteuerung einfließt.

Figur 2 zeigt, wie aus den Eingangsgrößen Lenkraddrehmoment $T_{TS}$, Fahrzeuggeschwindigkeit v und Lenkraddrehwinkel $\varphi_{SW}$ der Trägheitskompensationsbeitrag (Trägheitskompensations-Drehmomentanforderung) $T_{IC}$ ermittelt wird.

Mit Hilfe eines geeigneten Sensors wird das vom Fahrer aufgebrachte Lenkraddrehmoment $T_{TS}$ gemessen. In einem Hochpaßfilter 10 mit der Filterfrequenz $\Omega_{BF}$ wird das gemessene Signal $T_{TS}$ in ein Signal $T_{TS,HP}$ umgewandelt, das repräsentativ für die Dynamik des gemessenen Lenkraddrehmomentsignals $T_{TS}$ ist.

Der Lenkradwinkel $\varphi_{SW}$, d.h. der Einschlag des Lenkrads ausgehend von einer Nullstellung, wird ebenfalls gemessen, und das entsprechende Signal wird einem ersten Tiefpaßfilter 12 mit einer ersten Filterfrequenz $\Omega_{IC1}$ zugeführt. Das tiefpaßgefilterte Signal wird nach der Zeit differenziert und in einem zweiten Tiefpaßfilter 14 mit der zweiten Filterfrequenz $\Omega_{IC2}$ nochmals tiefpaßgefiltert.

Das resultierende Lenkradwinkelgeschwindigkeitssignal $\dot{\varphi}_{SW}$ wird zusammen mit der aktuellen Fahrzeuggeschwindigkeit v einem Zuweisungssystem 16 mit einem mehrdimensionalen Kennlinienfeld zugeführt. Im Zuweisungssystem wird der Kombination dieser beiden Eingangsgrößen $\dot{\varphi}_{SW}$, v ein vorbestimmter Trägheitskompensationsfaktor $K_{IC2}$ zugewiesen. Das hochpaßgefilterte Lenkraddrehmomentsignal $T_{TS,HP}$ wird mit dem Trägheitskompensationsfaktor $K_{IC2}$ und dem Vorzeichenfaktor $K_{IC,\,TGS}$ multipliziert.

Das Ergebnis dieser Multiplikation wird zusammen mit dem tiefpaßgefilterten Lenkradwinkelgeschwindigkeitssignal $\dot{\varphi}_{SW}$ einem Summenberechnungssystem 18 zugeführt. Im Summenberechnungssystem 18 wird die genaue Richtung der Trägheitskompensations-Drehmomentanforderung $T_{IC}$ in Abhängigkeit der Lenkradwinkelgeschwindigkeit $\dot{\varphi}_{sw}$ berechnet. Die lineare Berechnung der Trägheitskompensations-Drehmomentanforderung $T_{IC}$ kann durch folgende Gleichung beschrieben werden.

$$T_{IC} = T_{TS,\,HP} * K_{IC,\,TGS} * K_{IC2} \, (\dot{\varphi}_{SW} \,,\, v)$$

**Patentansprüche**

1. Verfahren zur Steuerung eines elektrischen Lenkhilfesystems mit einem Elektromotor zur Bereitstellung eines Hilfsdrehmoments für eine Lenkanordnung, bei dem ein vom Fahrer aufgebrachtes Lenkraddrehmoment ($T_{TS}$) gemessen wird, **dadurch gekennzeichnet, daß** das gemessene Lenkraddrehmomentsignal ($T_{TS}$) zur Bestimmung einer Trägheitskompensations-Drehmomentanforderung ($T_{IC}$) hochpaßgefiltert wird, so daß ein für die Dynamik des Lenkraddrehmomentsignals ($T_{TS}$) repräsentatives Signal ($T_{TS,\,HP}$) erhalten wird.

2. Verfahren nach Anspruch 1, **dadurch gekennzeichnet, daß** ein Lenkradwinkel $\varphi_{SW}$ gemessen und das entsprechende Signal tiefpaßgefiltert wird.

3. Verfahren nach Anspruch 2, **dadurch gekennzeichnet, daß** das tiefpaßgefilterte Lenkradwinkelsignal nach der Zeit differenziert und erneut tiefpaßgefiltert wird, so daß ein Lenkradwinkelgeschwindigkeitssignal ($\dot{\varphi}_{sw}$) erhalten wird.

4. Verfahren nach Anspruch 3, **dadurch gekennzeichnet, daß** das Lenkradwinkelgeschwindigkeitssignal ($\dot{\varphi}_{sw}$) und die aktuelle Fahrzeuggeschwindigkeit (v) einem Zuweisungssystem (16) zugeführt werden, das der Kombination dieser beiden Größen ($\dot{\varphi}_{sw}$, v) einen vorbestimten Trägheitskompensationsfaktor ($K_{IC2}$) zuweist.

5. Verfahren nach Anspruch 4, **dadurch gekennzeichnet, daß** das hochpaßgefilterte Lenkraddrehmomentsignal ($T_{TS,HP}$) mit dem Trägheitskompensationsfaktor ($K_{IC2}$) und einem Vorzeichenfaktor ($K_{IC,\,TGS}$) multipliziert wird.

6. Verfahren nach einem der Ansprüche 2 bis 5 **dadurch gekennzeichnet, daß** in einem Summenberechnungssystem (18) die Richtung der Trägheitskompensations-Drehmomentanforderung ($T_{IC}$) in Abhängigkeit der Lenkradwinkelgeschwindigkeit ($\dot{\varphi}_{SW}$) berechnet wird.

7. Verfahren nach einem der vorhergehenden Ansprüche, **dadurch gekennzeichnet, daß** die bestimmte Trägheitskompensations-Drehmomentanforderung ($T_{IC}$) in einen Unterstützungs- und Stabilitätsregelpfad zur Steuerung des elektrischen Lenkhilfesystems einfließt.

8. Elektrisches Lenkhilfesystem mit einer Steuerung zur Durchführung des Verfahrens nach einem der vorhergehenden Ansprüche, wobei das elektrische Lenkhilfesystem einen Elektromotor zur Bereitstellung eines Hilfsdrehmoments für eine Lenkanordnung umfaßt, **dadurch gekennzeichnet, daß** die Steuerung einen Hochpaßfilter (10) aufweist, in dem das Lenkraddrehmomentsignal ($T_{TS}$) hochpaßgefiltert wird.

**9.** Elektrisches Lenkhilfesystem nach Anspruch 8 mit einer Steuerung zur Durchführung des Verfahrens nach einem der Ansprüche 2 bis 7, **dadurch gekennzeichnet, daß** die Steuerung einen ersten Tiefpaßfilter 12 mit einer ersten Filterfrequenz ($\Omega_{IC1}$) zum Tiefpaßfiltern des Lenkradwinkelsignals ($\varphi_{SW}$) aufweist.

**10.** Elektrisches Lenkhilfesystem nach Anspruch 9, **dadurch gekennzeichnet, daß** die Steuerung einen zweiten Tiefpaßfilter 14 mit einer zweiten Filterfrequenz ($\Omega_{IC2}$) zum Tiefpaßfiltern des tiefpaßgefilterten und nach der Zeit differenzierten Lenkradwinkelsignals ($\varphi_{SW}$) zur Erzeugung eines Lenkradwinkelgeschwindigkeitssignals ($\dot{\varphi}_{SW}$) aufweist.

**11.** Elektrisches Lenkhilfesystem nach Anspruch 10, **dadurch gekennzeichnet, daß** die Steuerung ein Zuweisungssystem (16) aufweist, das in Abhängigkeit des Lenkradwinkelgeschwindigkeitssignals ($\dot{\varphi}_{SW}$) und der Fahrzeuggeschwindigkeit (v) einen Trägheitskompensationsfaktor ($K_{IC2}$) bestimmt.

**12.** Elektrisches Lenkhilfesystem nach einem der Ansprüche 8 bis 11 mit einer Steuerung zur Durchführung des Verfahrens nach einem der Ansprüche 3 bis 7, **dadurch gekennzeichnet, daß** die Steuerung ein Summenberechnungssystem (18) aufweist, in dem die genaue Richtung der Trägheitskompensations-Drehmomentanforderung ($T_{IC}$) in Abhängigkeit der Lenkradwinkelgeschwindigkeit ($\dot{\varphi}_{SW}$) berechnet wird.

**Claims**

**1.** A method for controlling an electric steering assistance system having an electric motor to provide an auxiliary torque for a steering arrangement, in which a steering wheel torque ($T_{TS}$) applied by the driver is measured, **characterized in that** the measured steering wheel torque signal ($T_{TS}$) undergoes high-pass filtering to determine an inertia compensation torque requirement ($T_{IC}$) such that a signal ($T_{TS,\ HP}$) is obtained which is representative of the dynamics of the steering wheel torque signal ($T_{TS}$).

**2.** The method according to claim 1, **characterized in that** a steering wheel angle $\varphi_{SW}$ is measured and the corresponding signal undergoes low-pass filtering.

**3.** The method according to claim 2, **characterized in that** the low-pass filtered steering wheel angle signal is differentiated according to time and undergoes low-pass filtering again, such that a steering wheel angle velocity signal ($\dot{\varphi}_{SW}$) is obtained.

**4.** The method according to claim 3, **characterized in that** the steering wheel angle velocity signal ($\dot{\varphi}_{SW}$) and the current vehicle velocity (v) are supplied to an assignment system (16) which assigns a predetermined inertia compensation factor ($K_{IC2}$) to the combination of these two values ($\dot{\varphi}_{SW}$, v).

**5.** The method according to claim 4, **characterized in that** the high-pass filtered steering wheel torque signal ($T_{TS,\ HP}$) is multiplied by the inertia compensation factor ($K_{IC2}$) and a sign factor ($K_{IC,\ TGS}$).

**6.** The method according to any of claims 2 to 5, **characterized in that** the direction of the inertia compensation torque requirement ($T_{IC}$) is calculated as a function of the steering wheel angle velocity ($\dot{\varphi}_{SW}$) in a sum calculation system (18).

**7.** The method according to any of the preceding claims, **characterized in that** the specified inertia compensation torque requirement ($T_{IC}$) flows into an assistance- and stability regulating path to control the electric steering assistance system.

**8.** An electric steering assistance system having a control arrangement to carry out the method according to any of the preceding claims, the electric steering assistance system comprising an electric motor to provide an auxiliary torque for a steering arrangement, **characterized in that** the control arrangement has a high-pass filter (10) in which the steering wheel torque signal ($T_{TS}$) undergoes a high-pass filtering.

**9.** The electric steering assistance system according to claim 8 having a control arrangement to carry out the method according to any of claims 2 to 7, **characterized in that** the control arrangement has a first low-pass filter 12 having a first filter frequency ($\Omega_{IC1}$) for low-pass filtering of the steering wheel angle signal ($\varphi_{SW}$).

**10.** The electric steering assistance system according to claim 9, **characterized in that** the control arrangement has a second low-pass filter 14 having a second filter frequency ($\Omega_{IC2}$) for low-pass filtering the low-pass filtered steering wheel angle signal $(\varphi_{sw})$, differentiated according to time, to produce a steering wheel angle velocity signal $(\dot{\varphi}_{SW})$.

**11.** The electric steering assistance system according to claim 10, **characterized in that** the control arrangement has an assignment system (16) which determines an inertia compensation factor ($K_{IC2}$) as a function of the steering wheel angle velocity signal ($\dot{\varphi}_{SW}$) and the vehicle velocity (v).

**12.** The electric steering assistance system according to any of claims 8 to 11 having a control arrangement to carry out the method according to any of claims 3 to 7, **characterized in that** the control arrangement has a sum calculation system (18) in which the precise direction of the inertia compensation torque requirement ($T_{IC}$) is calculated as a function of the steering wheel angle velocity ($\dot{\varphi}_{SW}$).

**Revendications**

**1.** Procédé de commande d'un système de direction assistée électrique, comportant un moteur électrique pour fournir un couple de rotation auxiliaire pour un agencement de direction, dans lequel est mesuré un couple de rotation de volant de direction ($T_{TS}$), **caractérisé en ce que** le signal de couple de rotation de volant de direction ($T_{TS}$) est soumis à un filtrage passe-haut pour déterminer une demande de couple de rotation de compensation d'inertie ($T_{IC}$), de telle sorte que l'on obtient un signal représentatif ($T_{TS, \, HP}$) représentatif pour la dynamique du signal de couple de rotation de volant de direction ($T_{TS}$).

**2.** Procédé selon la revendication 1, **caractérisé en ce qu'**un angle de volant de direction $\varphi_{SW}$ est mesuré et le signal correspondant est soumis à un filtrage passe-haut.

**3.** Procédé selon la revendication 2, **caractérisé en ce que** le signal d'angle de volant de direction est différencié selon le temps et de nouveau soumis à un filtrage passe-haut, de telle sorte que l'on obtient un signal de vitesse d'angle de volant de direction ($\dot{\varphi}_{sw}$).

**4.** Procédé selon la revendication 3, **caractérisé en ce que** le signal de vitesse d'angle de volant de direction ($\dot{\varphi}_{SW}$) et la vitesse de véhicule (v) actuelle sont amenés à un système d'assignation (16) qui assigne un facteur de compensation d'inertie ($K_{IC2}$) prédéterminé à la combinaison de ces deux valeurs ($\dot{\varphi}_{SW}$, v).

**5.** Procédé selon la revendication 4, **caractérisé en ce que** le signal de couple de rotation ($T_{TS, \, HP}$) soumis à filtrage passe-haut est multiplié par le facteur de compensation d'inertie ($K_{IC2}$) et par un facteur de signe ($K_{IC, \, TGS}$).

**6.** Procédé selon l'une des revendications 2 à 5, **caractérisé en ce que** la direction de la demande de couple de rotation de compensation d'inertie ($T_{IC}$) est calculée en fonction de la vitesse d'angle de volant de direction ($\dot{\varphi}_{SW}$) dans un système de calcul de somme (18).

**7.** Procédé selon l'une des revendications précédentes, **caractérisé en ce que** la demande de couple de rotation de compensation d'inertie ($T_{IC}$) déterminée est allouée dans un chemin de réglage d'assistance et de stabilité pour commander le système de direction assistée électrique.

**8.** Système de direction assistée électrique, comportant une commande pour mettre en oeuvre le procédé selon l'une des revendications précédentes, dans lequel le système de direction assistée électrique comprend un moteur électrique pour fournir un couple de rotation auxiliaire pour un agencement de direction, **caractérisé en ce que** la commande présente un filtre passe-haut (10) dans lequel le signal de couple de rotation de volant de direction ($T_{TS}$) est soumis à un filtrage passe-haut.

**9.** Système de direction assistée électrique selon la revendication 8, comportant une commande pour mettre en oeuvre le procédé selon l'une des revendications 2 à 7, **caractérisé en ce que** la commande présente un premier filtre passe-bas (12) avec une première fréquence de filtrage ($\Omega_{ICI}$) pour soumettre le signal de vitesse d'angle de volant de direction ($\varphi_{sw}$) à un filtrage passe-bas.

**10.** Système de direction assistée électrique selon la revendication 9, **caractérisé en ce que** la commande présente un deuxième filtre passe-bas (14) avec une deuxième fréquence de filtrage ($\Omega_{IC2}$) pour soumettre à un filtrage passe-bas le signal de vitesse d'angle de volant de direction ($\varphi_{SW}$) filtré passe-bas et différencié selon le temps, pou engendrer un signal de vitesse d'angle de volant de direction ($\dot{\varphi}_{SW}$).

11. Système de direction assistée électrique selon la revendication 10, **caractérisé en ce que** la commande présente un système d'assignation (16) qui détermine un facteur de compensation d'inertie ($K_{IC2}$) en fonction du signal de vitesse d'angle de volant de direction ($\dot{\varphi}_{SW}$) et de la vitesse de véhicule (v).

12. Système de direction assistée électrique selon l'une des revendications 8 à 11, comportant une commande pour mettre en oeuvre le procédé selon l'une des revendications 3 à 7, **caractérisé en ce que** la commande présente un système de calcul de somme (18) dans lequel la direction exacte de la demande de couple de rotation de compensation d'inertie ($T_{IC}$) est calculée en fonction de la vitesse d'angle de volant de direction ($\dot{\varphi}_{SW}$).

EP 1 855 933 B1

## FIG. 1

FAHRZEUGGESCHWINDIGKEIT

LENKRADDREHMOMENT

UNTERSTÜTZUNG- UND STABILITÄTSREGELUNG

LENKRADWINKEL

TRÄGHEITS-KOMPENSATION

$T_{IC}$

GESCHW. DES ELEKTROMOTORS

AKTIVE DÄMPFUNG

$T$

AKTIVE RÜCKSTELLUNG

## FIG. 2

10

$T_{TS}$

$\dfrac{s}{s+\Omega_{BF}}$

$K_{IC2} = f(\varphi_{SW}, v)$

16

$v$

$K_{IC, TGS}$

$T_{TS, HP}$

$\times$

18

$T_{IC}$

$\dot{\varphi}_{SW}$

12

14

$\varphi_{SW}$

$\dfrac{\Omega_{IC1}}{s+\Omega_{IC1}}$

$\dfrac{dt1}{dt}$

$\dfrac{\Omega_{IC2}}{s+\Omega_{IC2}}$

$\dot{\varphi}_{SW}$

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1211158 A

- WO 0112492 A